# EUROPEAN PATENT APPLICATION

(11) **EP 4 527 893 A1**
(43) Date of publication of application: **26.03.2025**
(21) Application number: 23807894.3
(22) Date of filing: 17.05.2023
(51) Int. Cl.: C08L 77/00, C08L 29/04, C08L 23/08, C08L 101/00, C08L 67/00, C08L 75/04, C08L 53/00, F17C 1/16

(54) **COMPOSITION AND LINER FOR HIGH PRESSURE GAS STORAGE TANK COMPRISING SAME**

(30) Priority: 19.05.2022 KR 20220061337
(71) Applicant: Hanwha Solutions Corporation, Jung-gu Seoul 04541 (KR)
(72) Inventor: SONG, Hansoo, Daejeon 34128 (KR); KANG, Won Jun, Daejeon 34128 (KR); KANG, Chulee, Daejeon 34128 (KR); KIM, Seung Hyun, Daejeon 34128 (KR); LEE, Jaehyeok, Daejeon 34128 (KR); BAE, Seong Soo, Daejeon 34128 (KR)
(74) Representative: Berggren Oy
(86) International application number: PCT/KR2023/006653
(87) International publication number: WO 2023/224375

(57) **Abstract**

Provided are a composition having excellent gas barrier property and low-temperature impact resistance, and a liner for high-pressure gas storage tanks including the same. Particularly, provided are a composition, in which resin particles reinforcing low-temperature impact resistance are dispersed in a gas barrier resin, thereby having excellent gas barrier property and excellent impact resistance while being easily moldable, and a liner for high-pressure gas storage tanks.

## Description

### [TECHNICAL FIELD]

### CROSS-REFERENCE TO RELATED APPLICATION(S)

The present application is based on, and claims priority from, Korean Patent Application No. 10-2022-0061337, filed on May 19, 2022, the disclosure of which is hereby incorporated by reference herein in its entirety.

The present invention provides a composition and a liner for high-pressure gas storage tanks including the same. Particularly, the present invention provides a composition having excellent processability and excellent gas barrier property and low-temperature impact resistance, and a liner for high-pressure gas storage tanks.

### [BACKGROUND ART]

Metal materials have been traditionally used in high-pressure gas storage tanks, particularly, liners for storage tanks. However, since the liners for storage tanks, made of metal materials, are heavy, it is not easy to transport, and thus there is a problem of requiring high cost of transportation. Accordingly, for weight lightening, resins have been recently used as a liner composition.

The resins used for weight lightening in liners include polyamide, polyethylene, and the like. However, there are problems in that polyethylene-based liners have inferior gas barrier property to polyamide-based liners, and polyamide-based liners have inferior impact resistance or chemical resistance, although their gas barrier property is superior to that of polyethylene-based liners.

In addition, the existing blend resin compositions have a problem of inferior processability, which limits the processing method when processing into a product.

Accordingly, there is a need to develop a composition for a liner resin for a high-pressure gas storage tank that is suitable for high-pressure gas storage, the composition having excellent gas barrier property and low-temperature impact resistance, and having improved processability, thereby being applied to a wider range of processing methods such as rotomolding, etc.

### [DETAILED DESCRIPTION OF THE INVENTION]

### [Technical Problem]

Accordingly, there are provided a composition having excellent processability and excellent gas barrier property and low-temperature impact resistance, and a liner for high-pressure gas storage tanks including the same. Particularly, there are provided a composition, in which thermoplastic elastomer particles to complement low-temperature impact resistance are dispersed in a gas barrier resin, and a liner for high-pressure gas storage tanks including the same.

### [Technical Solution]

A gas barrier resin (A) and a thermoplastic elastomer (B) which is dispersed in the form of particles in the gas barrier resin (A) are included, a low-temperature impact strength may be 10 kJ/m² or more, as measured according to ASTM D256, oxygen permeability may be 1.0 cm³/(m²·day) or less, as measured according to ASTM D3985, and a melt flow index may be 3.0 g/10min or more, as measured according to ASTM D1238.

The content of the thermoplastic elastomer (B) may be 11% by weight to 50% by weight with respect to the total weight of the gas barrier resin (A) and the thermoplastic elastomer (B).

The gas barrier resin (A) may include one or more selected from the group consisting of a polyamide, a polyvinyl alcohol (PVOH), and an ethylene vinyl alcohol copolymer (EVOH).

The ethylene vinyl alcohol copolymer may have an ethylene content of more than 10 mol%.

The polyamide may be one or more selected from the group consisting of nylon-4,6, nylon-6, nylon-6,6, nylon-6,10, nylon-7, nylon-8, nylon-9, nylon-11, nylon-12, nylon-46, MXD6, and amorphous polyamide, or a copolymer of two or more thereof, or a mixture of two or more thereof.

The thermoplastic elastomer (B) may include one or more selected from the group consisting of a polyether block amide (TPA), a polyester copolymer (TPC), a thermoplastic polyurethane (TPU), a styrene block copolymer (TPS), and a thermoplastic polyester elastomer (TPEE).

The composition may be composed of the gas barrier resin (A) and the thermoplastic elastomer (B) which is dispersed in the form of particles in the gas barrier resin (A).

Further, the composition may have a low-temperature impact strength of 10 kJ/m² or more to 25 kJ/m² or less, as measured according to ASTM D256.

Further, the composition may have oxygen permeability of more than 0 cm³/(m²·day) to 1.0 cm³/(m²·day) or less, as measured according to ASTM D3985.

Further, the composition may have a melt flow index of 3.0 g/10min or more to 10.0 g/10min or less, as measured according to ASTM D1238.

A liner for high-pressure gas storage tanks according to one embodiment of the present invention may include the composition.

### [ADVANTAGEOUS EFFECTS]

According to the present invention, thermoplastic elastomer particles reinforcing low-temperature impact resistance are dispersed in a gas barrier resin, thereby providing a composition, in which excellent gas barrier property and excellent impact resistance are compatible, and a liner for high-pressure gas storage tanks including the same.

Further, according to the present invention, a composition for a liner for a high-pressure gas storage tank may be provided, which may be applied to a wide range of processing methods by improving processability.

### [BRIEF DESCRIPTION OF DRAWINGS]

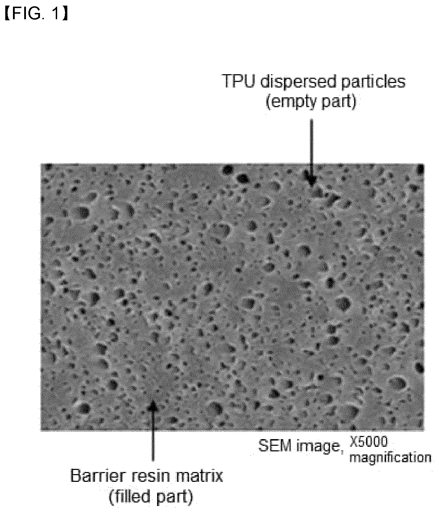

FIG. 1 shows an image of a composition of one embodiment of the present invention, as observed using a scanning electron microscope (SEM), in which a thermoplastic elastomer (B) is dispersed in the form of particles in a gas barrier resin (A).

### [DETAILED DESCRIPTION OF THE EMBODIMENTS]

In the present invention, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "comprise", "equipped", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, in the present invention, when a layer or an element is mentioned to be formed "on" or "above" layers or elements, it means that each layer or element is directly formed on the layers or elements, or other layers or elements may be additionally formed between the layers, subjects, or substrates.

While the present invention is susceptible to various modifications and alternative forms, specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a composition and a liner for high-pressure gas storage tanks including the same according to embodiments of the present invention will be described in detail.

According to one embodiment of the present invention, the composition of the present invention may include a gas barrier resin (A) and a thermoplastic elastomer (B) which is dispersed in the form of particles in a gas barrier resin (A).

The gas barrier resin (A) may include one or more selected from the group consisting of a polyamide, a polyvinyl alcohol (PVOH), and an ethylene vinyl alcohol copolymer (EVOH).

Specifically, the gas barrier resin (A) may be an ethylene vinyl alcohol copolymer (EVOH). The ethylene vinyl alcohol copolymer is a copolymer consisting of an ethylene unit and a vinyl alcohol unit, in which the content of the ethylene unit may be 10 mol% or more. Specifically, the content of the ethylene unit in the ethylene vinyl alcohol copolymer may be 35 mol% or more, 38 mol% or more, 40, mol% or more, 42 mol% or more, or 44 mol% or more and 50 mol% or less, or 46 mol% or less. Further, a weight average molecular weight of the ethylene vinyl alcohol copolymer (EVOH) may be 30,000 g/mol to 250,000 g/mol. Specifically, the weight average molecular weight of the EVOH may be 100,000 g/mol to 150,000 g/mol.

When the content of the ethylene unit in the ethylene vinyl alcohol copolymer is too low, there may be a problem of inferior molding processability, and when the content of the ethylene unit is too high, there may be a problem of inferior gas barrier property.

Specifically, the gas barrier resin (A) may be a polyamide. The polyamide may be one or more selected from the group consisting of nylon-4,6, nylon-6, nylon-6,6, nylon-6,10, nylon-7, nylon-8, nylon-9, nylon-11, nylon-12, nylon-46, MXD6, and amorphous polyamide, or a copolymer of two or more thereof, or a mixture of two or more thereof.

However, polyphenylene sulfide compounds are not suitable in terms of improving burst strength to withstand high charging pressure, and therefore, when used as the gas barrier resin for a liner for high-pressure gas storage tanks, it is not suitable because it is apprehended that the reinforcing layer may break inside thereof.

The thermoplastic elastomer (B) may include one or more selected from the group consisting of a polyether block amide (TPA), a polyester copolymer (TPC), a thermoplastic polyurethane (TPU), a styrene block copolymer (TPS), and a thermoplastic polyester elastomer (TPEE). Specifically, the thermoplastic elastomer (B) may be thermoplastic polyurethane (TPU).

Since LDPE and POE, which are types of elastomers traditionally used, do not mix well with barrier resins such as EVOH, PA, etc., use of a compatibilizer is essential for the elastomer to be dispersed in the form of particles in the barrier resin. However, when the compatibilizer is added to the barrier resin, there is a problem in that viscosity of the blend resin composition increases due to additives included in the compatibilizer, which reduces processability. However, the elastomer to be used in the present invention is mixed well with the barrier resin, and thus the use of the compatibilizer is not necessary. Therefore, there is an advantage in that the viscosity of the blend resin composition is relatively low, and thus the processability may be excellent.

A weight average molecular weight (Mw) of the thermoplastic polyurethane (TPU) may be 50,000 g/mol to 500,000 g/mol. Specifically, the weight average molecular weight (Mw) may be 200,000 g/mol to 300,000 g/mol.

The content of the thermoplastic elastomer (B) may be 11% by weight to 50% by weight with respect to the total weight of the gas barrier resin (A) and the thermoplastic elastomer (B). Specifically, the content may be 11% by weight or more, 20% by weight or more, 30% by weight or more, 35% by weight or more, or 40% by weight or more to 60% by weight or less, 55% by weight or less or 50% by weight or less.

When the thermoplastic elastomer (B) is mixed in an excessively small amount, there may be a problem of inferior low-temperature impact resistance, and when it is mixed in an excessively large amount, there may be a problem of loss of gas barrier property.

Further, the composition of the present invention may not further include a compatibilizer. As seen in the elastomer above, when the compatibilizer is included, there are problems that the viscosity of the blend resin composition tends to increase, making it difficult to control the viscosity, and processability may be inferior. In contrast, when the compatibilizer is not included, a blend resin composition having a relatively low viscosity may be prepared, thereby providing a composition having relatively excellent processability. In other words, the composition of the present invention may be composed of the gas barrier resin (A) and the thermoplastic elastomer (B) dispersed in the form of particles in the gas barrier resin (A).

The composition according to the present invention may have a low-temperature impact strength of 10 kJ/m² or more when stored for 4 hours at a temperature of -40°C according to ASTM D256. Specifically, the low-temperature impact strength may be 10 kJ/m² or more, 15 kJ/m² or more, 16 kJ/m² or more, 17 kJ/m² or more, or 18kJ/m² or more to 25 kJ/m² or less, 22 kJ/m² or less, or 20 kJ/m² or less.

In addition, the composition according to the present invention may have oxygen permeability of 1.0 cm³/(m²·day) or less, as measured according to ASTM D3985 under conditions of a liner thickness of 1 mm, a temperature of 23.0°C, and relative humidity of 65%. Specifically, the oxygen permeability may be more than 0 cm³/(m²·day), or 0.1 cm³/(m²·day) or more, and 1.0 cm³/(m²·day) or less, 0.5 cm³/(m²·day) or less, or 0.2 cm³/(m²·day) or less.

In addition, the composition according to the present invention may have a melt flow index of 3.0 g/10min or more, as measured according to ASTM D1238 at a temperature of 190°C under a load of 2.16 kg. Specifically, the melt flow index may be 3.0 g/10min or more, 4.0 g/10min or more, 4.5 g/10min or more, 5.0 g/10min or more, 5.5 g/10min or more, or 6.0 g/10min or more, and 10.0 g/10min or less, 8.0 g/10min or less, or 7.0 g/10min or less.

This is because, as the thermoplastic elastomer (B) is added to the gas barrier resin (A) according to the above-described composition, the composition of the present invention may have excellent gas barrier property and excellent low-temperature impact resistance while having improved processability.

In addition, the liner for high-pressure gas storage tanks according to the present invention may include the above composition. Accordingly, the liner for high-pressure gas storage tanks according to the present invention is excellent in terms of gas barrier property and impact resistance, and processability.

To apply the composition according to the present invention to the liner for high-pressure gas storage tanks, processing methods such as rotomolding, etc. may be employed.

Hereinafter, preferred exemplary embodiments will be provided for better understanding of the present invention. However, the following exemplary embodiments are provided only for illustrating the present invention, but the present invention is not limited thereby.

### Preparation Example: Preparation of composition for liner for high-pressure gas storage tanks

A composition of Example 1 was prepared by mixing 59% by weight of an ethylene vinyl alcohol copolymer (EVOH) with 41% by weight of a thermoplastic polyurethane (TPU) as a thermoplastic elastomer.

A composition of Example 2 was prepared by mixing 64% by weight of the ethylene vinyl alcohol copolymer (EVOH) with 36% by weight of the thermoplastic polyurethane (TPU) as the thermoplastic elastomer.

A composition of Example 3 was prepared by mixing 69% by weight of the ethylene vinyl alcohol copolymer (EVOH) with 31% by weight of the thermoplastic polyurethane (TPU) as the thermoplastic elastomer.

A composition of Comparative Example 1 was prepared by using 100% by weight of the ethylene vinyl alcohol copolymer (EVOH).

A composition of Comparative Example 2 was prepared by mixing 90% by weight of the ethylene vinyl alcohol copolymer (EVOH) with 10% by weight of the thermoplastic polyurethane (TPU) as the thermoplastic elastomer.

A composition of Comparative Example 3 was prepared by mixing 10% by weight of the ethylene vinyl alcohol copolymer (EVOH) with 90% by weight of the thermoplastic polyurethane (TPU) as the thermoplastic elastomer.

As the ethylene vinyl alcohol copolymer (EVOH) used in Examples 1 to 3 and Comparative Examples 1 to 3, EVOH having a weight average molecular weight (Mw) of 134,790 g/mol was used.

For the preparation of melt blend resins, which are the compositions of Examples 1 to 3 and Comparative Example 3, a twin-screw extruder (27 mmφ) from Leistritz was used. The temperature of a sample input part of the twin-screw extruder, as a processing temperature, was 170°C, the average internal temperature of an extruder was 200°C, and the temperature of an extrusion orifice was 210°C. Preparation was performed under conditions of a screw speed of 200 rpm to 250 rpm, and a feeding speed of 8 kg/h to 9 kg/h.

### Experimental Example: Test of composition for liner for high-pressure gas storage tanks

The compositions of Examples 1 to 3 and Comparative Examples 1 to 3 prepared above were tested for oxygen permeability, low-temperature impact strength, and melt flow index. Each of the test methods is as follows.

The oxygen permeability was measured according to the measurement method ASTM D3985 under conditions of a liner thickness of 1 mm, a temperature of 23.0°C, and a relative humidity of 65%.

The low-temperature impact strength was measured according to the measurement method ASTM D256 after storage for 4 hours at -40°C.

The melt flow index was measured according to the measurement method ASTM D1238 at a temperature of 190°C under a load of 2.16 kg.

The measurement results are shown in Table 1 below.

**[Table 1]**

| Section | Oxygen permeability [cm³/(m²·day)] | Low-temperature impact strength [kJ/m²] | Melt flow index [g/10 min] |
|---|---|---|---|
| Example 1 | 0.1 | 18.4 | 6.0 |
| Example 2 | 0.1 | 17.0 | 5.5 |
| Example 3 | 0.1 | 16.1 | 4.9 |
| Comparative Example 1 | 0.04 | 3.9 | 5.5 |
| Comparative Example 2 | 0.2 | 4.6 | 5.2 |
| Comparative Example 3 | 103.7 | N.B. | 23.1 |

Comparative Examples 1 and 2 showed inferior low-temperature impact strength, as compared to Examples, and Comparative Example 3 showed excellent low-temperature impact strength, measured as N.B. (Non-break), but showed inferior gas barrier property due to high oxygen permeability.

## Claims

1. A composition comprising a gas barrier resin (A) and a thermoplastic elastomer (B) which is dispersed in the form of particles in the gas barrier resin (A),
wherein a low-temperature impact strength is 10 kJ/m² or more, as measured according to ASTM D256,
oxygen permeability is 1.0 cm³/(m²·day) or less, as measured according to ASTM D3985, and
a melt flow index is 3.0 g/10min or more, as measured according to ASTM D1238.

2. The composition of claim 1, wherein the content of the thermoplastic elastomer (B) is 11% by weight to 50% by weight with respect to the total weight of the gas barrier resin (A) and the thermoplastic elastomer (B).

3. The composition of claim 1, wherein the gas barrier resin (A) includes one or more selected from the group consisting of a polyamide, a polyvinyl alcohol (PVOH), and an ethylene vinyl alcohol copolymer (EVOH).

4. The composition of claim 3, wherein the content of ethylene in the ethylene vinyl alcohol copolymer is more than 10 mol%.

5. The composition of claim 3, wherein the polyamide is one or more selected from the group consisting of nylon-4,6, nylon-6, nylon-6,6, nylon-6,10, nylon-7, nylon-8, nylon-9, nylon-11, nylon-12, nylon-46, MXD6, and amorphous polyamide, or a copolymer of two or more thereof, or a mixture of two or more thereof.

6. The composition of claim 1, wherein the thermoplastic elastomer (B) includes one or more selected from the group consisting of a polyether block amide (TPA), a polyester copolymer (TPC), a thermoplastic polyurethane (TPU), a styrene block copolymer (TPS), and a thermoplastic polyester elastomer (TPEE).

7. The composition of claim 1, wherein the composition is composed of the gas barrier resin (A) and the thermoplastic elastomer (B) which is dispersed in the form of particles in the gas barrier resin (A).

8. The composition of claim 1, wherein the composition has a low-temperature impact strength of 10 kJ/m² or more to 25 kJ/m² or less, as measured according to ASTM D256.

9. The composition of claim 1, wherein the composition has oxygen permeability of more than 0 cm³/(m²·day) to 1.0 cm³/(m²·day) or less, as measured according to ASTM D3985.

10. The composition of claim 1, wherein the composition has a melt flow index of 3.0 g/10min or more to 10.0 g/10min or less, as measured according to ASTM D1238.

11. A liner for high-pressure gas storage tanks, the liner comprising the composition of any one of claims 1 to 10.
